# EUROPEAN PATENT APPLICATION

(11) **EP 4 600 893 A1**
(43) Date of publication of application: **13.08.2025**
(21) Application number: 24760588.4
(22) Date of filing: 22.02.2024
(51) Int. Cl.: G06Q 50/26, G06Q 50/40, H04L 67/1097

(54) **DEVICE AND SYSTEM FOR TRANSMITTING AND RECEIVING NEXT-GENERATION INTELLIGENT TRANSPORT SYSTEM DATA, OR METHOD THEREFOR**

(30) Priority: 24.02.2023 KR 20230025384
(71) Applicant: LG Electronics Inc., Yeongdeungpo-gu Seoul 07336 (KR)
(72) Inventor: SONG, Min, Seoul 06772 (KR); KIM, Hakseong, Seoul 06772 (KR); LEE, Yoonjong, Seoul 06772 (KR)
(74) Representative: Vossius & Partner Patentanwälte Rechtsanwälte mbB
(86) International application number: PCT/KR2024/002322
(87) International publication number: WO 2024/177399

(57) **Abstract**

Proposed is a terminal device for receiving next-generation intelligent transport system (cooperative intelligent transport system; C-ITS) data. The terminal device comprises: a transceiver for transmitting and receiving the C-ITS data or control information to and from a plurality of regional servers or a central server; and a processor for processing the C-ITS data or the control information. The terminal device establishes a control path for transmitting and receiving the control information to and from the central server, and may establish a data path for transmitting and receiving the C-ITS data to and from each of the plurality of regional servers and an auxiliary data path for transmitting and receiving auxiliary C-ITS data to and from the central server.

## Description

### TECHNICAL FIELD

The present disclosure relates to a device, system, or method for transmitting and receiving data in a cooperative intelligent transport system.

### BACKGROUND

In South Korea, the government is promoting the introduction of a cooperative intelligent transport system (C-ITS), which is a next-generation intelligent transport system (ITS). Currently, pilot projects are underway in certain regions. A traditional ITS refers to a transport system that improves traffic efficiency and safety and manages operations thereof scientifically and automatically by developing and utilizing advanced transportation technologies such as electronics, control, and communication, along with traffic information.

With the advancement of information and communication technologies such as vehicle-to-vehicle (V2V) and vehicle-to-infrastructure (V2I), the ITS has evolved into the C-ITS where vehicles and infrastructure exchange information and cooperate.

The C-ITS provides real-time information on surrounding traffic conditions and hazardous situations such as sudden stops or falling objects. In other words, the C-ITS is a traffic system focused on user safety rather than road management. The ITS, which is the predecessor of the C-ITS, is a transport system that incorporates advanced technologies into transportation means and facilities to automate the operation and management of traffic systems and enhance the efficiency and safety. Due to these differences, the C-ITS is expected to enable a wider variety and larger volume of data to be exchanged between transportation means, facilities, and other elements within the system, compared to the ITS. Furthermore, to advance the ITS and develop related services, data exchange and sharing for the ITS should be carried out quickly and in real time.

However, the C-ITS is still not integrated or standardized across countries and regions and is currently being operated as a pilot project. In the future, communication is expected to expand to cover vehicle-to-wireless communication networks, data for the ITS needs to be actively exchanged within the network. To support services in a transitional state or in a state of integration and standardization between countries or regions, it is necessary to establish methods for data linkage and data transmission and reception for the ITS between countries and regions.

### DISCLOSURE

### TECHNICAL PROBLEM

The present disclosure aims to provide a method for data linkage in a cooperative intelligent transport system (C-ITS) and a method of transmitting and receiving C-ITS data.

Additionally, the present disclosure aims to provide a method of distributing data in a C-ITS to reduce transmission and reception latency.

Additionally, the present disclosure aims to provide a method of transmitting and receiving services or data seamlessly in a C-ITS even when a client receiving the services or data is moving.

It will be appreciated by people skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

In an aspect of the present disclosure, provided herein is a terminal device configured to receive cooperative intelligent transport system (C-ITS) data. The terminal device includes: a transceiver configured to transmit and receive the C-ITS data or control information with a central server or a plurality of regional servers; and a processor configured to process the C-ITS data or the control information. The terminal device may be configured to: establish a control path for transmission and reception of the control information with the central server; establish a data path for transmission and reception of the C-ITS data with each of the plurality of regional servers; and establish an auxiliary data path for transmission and reception of supplementary C-ITS data with the central server.

In another aspect of the present disclosure, provided herein is a central server device configured to provide C-ITS data to a client terminal. The central server device includes: a transceiver configured to transmit and receive the C-ITS data or control information with the client terminal or a plurality of regional servers; and a processor configured to process the C-ITS data, the control information, or C-ITS data collected from public institutions. The central server may be configured to: establish a control path for transmission and reception of the control information with each of the client terminal and the plurality of regional servers; and establish an auxiliary data path for transmission and reception of supplementary C-ITS data with the client terminal,

In another aspect of the present disclosure, provided herein is a regional server device configured to provide C-ITS data. The regional server device includes: a transceiver configured to transmit and receive the C-ITS data or control information with a client terminal or a central server; and a processor configured to process the C-ITS data or the control information. The regional server may be configured to: establish a control path for transmission and reception of the control information with the central server; and establish a data path for transmission and reception of the C-ITS data with the client terminal.

In a further aspect of the present disclosure, provided herein is a C-ITS configured to provide C-ITS data. The C-ITS may include the above-described terminal device, central server device, and regional server device.

It will be understood by those skilled in the art that the above-described aspects of the present disclosure are merely part of various embodiments of the present disclosure, and various modifications and alternatives could be developed from the following technical features of the present disclosure.

### ADVANTAGEOUS EFFECTS

The present disclosure has the following effects.

Data or services for a cooperative intelligent transport system (C-ITS) with different specifications are unified from the perspective of a data or service consumer (i.e., client), allowing the data or service consumer to use services or data in a unified format.

Additionally, by distributing processing of data or services for a C-ITS across different areas, load concentration may be prevented, and data transmission and reception latency may be reduced, thereby ensuring real-time service quality.

Additionally, seamless service or data transmission and reception may be ensured in a C-ITS, even when a client receiving services or data is moving.

The effects according to the present disclosure are not limited to what has been particularly described hereinabove, and any other effects not mentioned may be clearly understood by those skilled in the art to which the present disclosure pertains from the following detailed description.

### BRIEF DESCRIPTION OF THE DRAWINGS

The accompanying drawings, included as part of the detailed description to aid in understanding the present disclosure, provide embodiments of the present disclosure and, together with the detailed description, illustrate the principle of the present disclosure.
FIG. 1 illustrates a system of a conventional ITS.
FIG. 2 illustrates a system of a C-ITS based on a data integration structure.
FIG. 3 illustrates a system of a C-ITS based on a data distribution structure.
FIG. 4 illustrates a part of a C-ITS based on a data distribution structure.
FIG. 5 is a block diagram for data linkage of a central server (or central server device).
FIG. 6 is a block diagram for data linkage of a regional server (or regional server device).
FIG. 7 is a block diagram for data linkage of a client terminal (or terminal device).
FIG. 8 illustrates a procedure for data transmission and reception based on a data distribution structure.
FIG. 9 illustrates a procedure for data transmission and reception based on a data distribution structure.
FIG. 10 is a system block diagram based on a data distribution structure.

### DETAILED DESCRIPTION

Hereinafter, the embodiments disclosed herein will be described in detail with reference to the accompanying drawings, but components that are the same as or similar to each other regardless of reference numerals will be given the same reference numerals, and redundant description thereof will be omitted. The suffixes "module" and "unit" for components used in the following description are given or used together in consideration of ease of writing the present document, and do not have meanings or roles that are distinct from each other by themselves. Further, in describing the embodiments disclosed herein, when it is determined that a detailed description of related known technologies may unnecessarily obscure the gist of the embodiments disclosed herein, detailed description thereof will be omitted. In addition, the attached drawings are provided for easy understanding of the embodiments disclosed herein and do not limit technical idea disclosed herein, and should be construed as including all modifications, equivalents, and alternatives falling within the spirit and scope of the present disclosure.

Although terms including ordinal numbers, such as first, second, and the like, may be used to describe various components, the components are not be limited by the terms. The terms are only used to distinguish one component from another.

It should be understood that when a component is referred to as being "connected with" another component, the component may be directly connected with another component or an intervening component may also be present. In contrast, it should be understood that when a component is referred to as being "directly connected with" another component, there is no intervening component present.

A singular representation may include a plural representation unless it represents a definitely different meaning from the context.

The terms "includes" or "has" used herein should be understood as not precluding possibility of existence or addition of one or more other characteristics, figures, steps, operations, constituents, components, or combinations thereof.

A cooperative intelligent transport system (C-ITS) refers to a user safety-oriented transport system where the present disclosure is applied and utilized. Data for the C-ITS refers to data exchanged or shared between regional servers and a central server, between the central server and clients, or between the regional servers and clients within the corresponding transport system. This data is used to provide services based on the C-ITS.

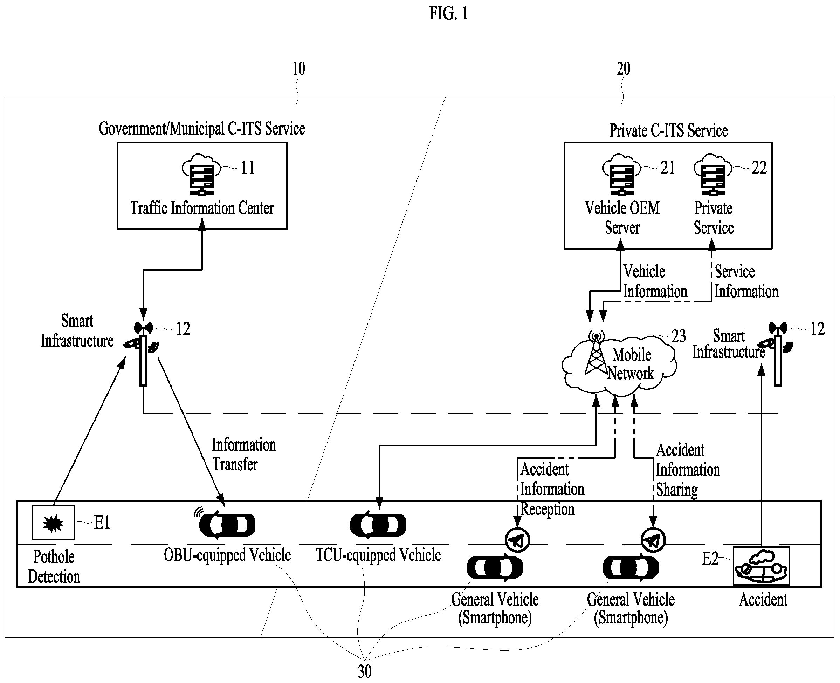

FIG. 1 illustrates a system of a conventional ITS.

In the prior art, a government/municipal C-ITS service 10 and a private C-ITS service 20 are clearly distinguished.

The government/municipal C-ITS service 10 may include a traffic information center 11, smart infrastructure 12, and vehicles 30 that receive information from the smart infrastructure 12. The traffic information center 11 may collect various types of information (e.g., pothole E1, accident E2, etc.) on a road environment through the smart infrastructure 12.

The private C-ITS service 20 may include a vehicle original equipment manufacturer (OEM) server 21, a private service server 22, a mobile network 23, and vehicles 30 equipped with various communication units. Vehicles equipped with communication units installed by a vehicle OEM may transmit and receive vehicle information through the vehicle OEM server 21. Vehicles with smartphones or other communication units may share or receive various service information (e.g., accident information) through the private service server 22.

Under such a system, the road environment information (e.g., E1, E2, vehicle driving information, etc.) is distributed between the government/municipal C-ITS service 10 and the private C-ITS service 20, which imposes limitations on data utilization and service expansion. Even within the government/municipal C-ITS service 10, data sharing between municipalities or between municipalities and the government faces limitations due to differences in data formats or specifications.

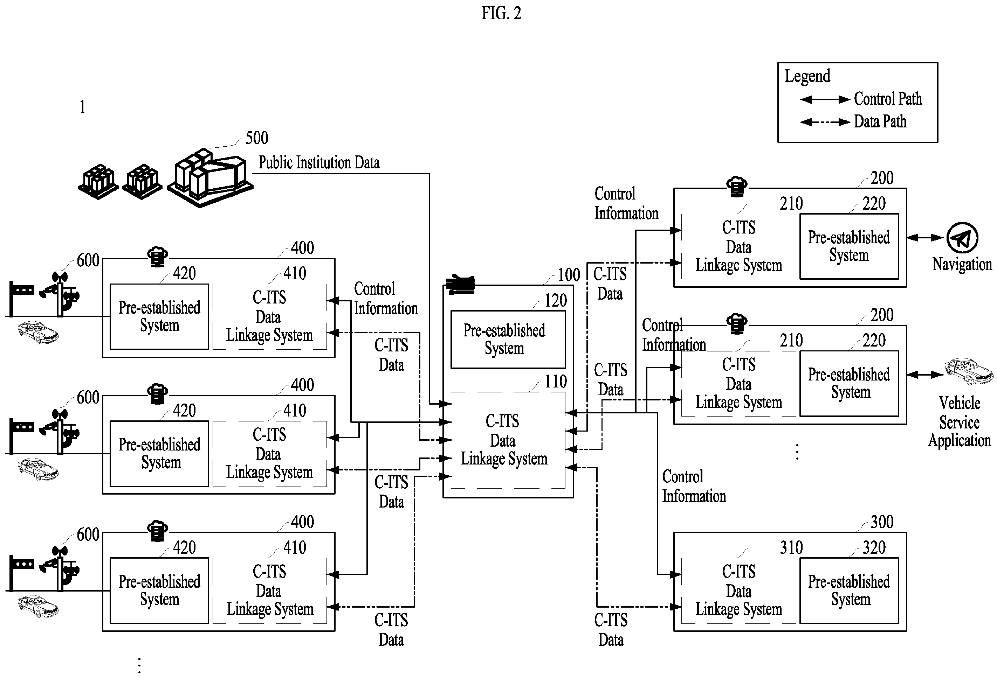

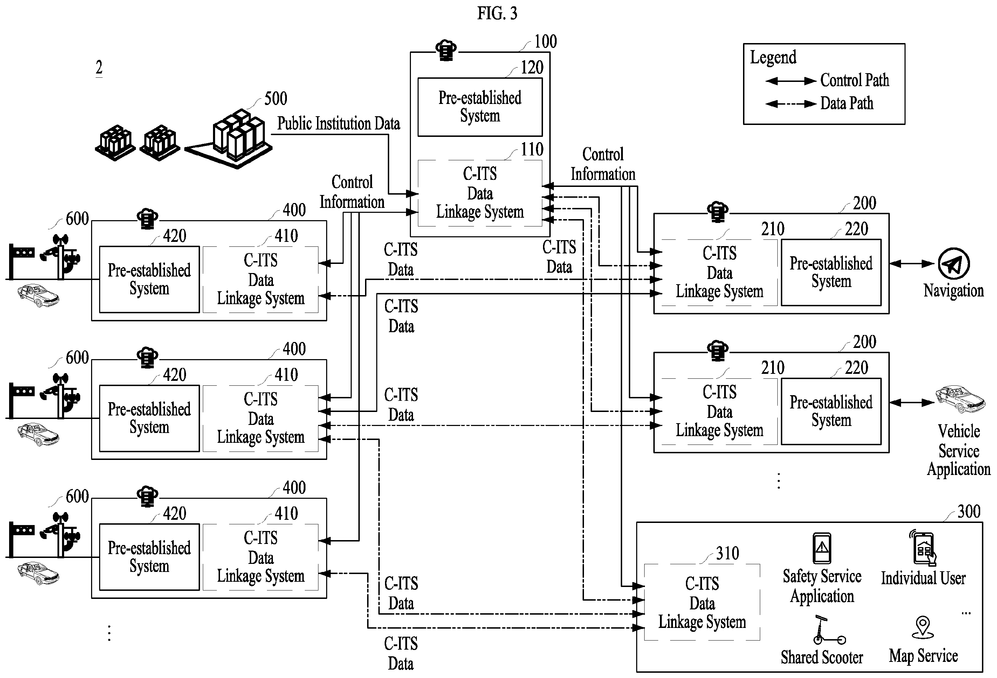

To address this issue, an integrated structure capable of unifying government/municipal services and private services is proposed, along with a new system illustrated in FIGS. 2 and 3. To this end, C-ITS data linkage between government/municipal services and private services is necessary.

The term "government/municipality" does not limit the scope of the present disclosure. The term "government" refers to a central entity that manages and supervises the integrated C-ITS service structure. Herein, the term "government" may be referred to as a "central server" or "central server device." Similarly, the term "municipality" refers to an entity that collects and provides C-ITS data for the integrated C-ITS service structure within each region. Herein, the term "municipality" may be referred to as a "regional server" or "regional server device." The term "private" does not limit the scope of the present disclosure. The term "private" refers to an entity that utilizes C-ITS data provided by the central server or regional server. Herein, the term "private" may be referred to as a "client server," "client server device," "client terminal," "client terminal device," or "terminal device."

From the perspective of C-ITS data supply and demand, a data supplier is an entity that collects or processes C-ITS data and provides the C-ITS data to other entities. Typically, the "regional server (or regional server device)" corresponds to the data supplier. In some cases, the "central server (or central server device)" may also act as the data supplier. On the other hand, a data consumer (user) is an entity that receives and processes C-ITS data and provides C-ITS-based services to end users. Typically, the "client server (or client server device)" or the "client terminal (or client terminal device)" corresponds to the data consumer (user).

Examples of the client server include a server entity that provides navigation services or a server entity that offers in-vehicle services related to vehicle operations. Examples of the client terminal include smartphones, tablets, and other devices where applications using C-ITS data are installed.

FIG. 2 illustrates a system 1 of a C-ITS based on a data integration structure. The system 1 may include central servers 100, client servers 200, client terminals 300, regional servers 400, public institutions 500, and roadside infrastructure 600. The number of central servers 100, client servers 200, client terminals 300, regional servers 400, and public institutions 500 within the system 1 is not limited to the depicted configuration.

The central server 100, client server 200, client terminal 300, and regional server 400 include C-ITS data linkage systems 110, 210, 310, and 410, respectively. The C-ITS data linkage system primarily performs the following functions: standardization of data or unification of data specifications/formats; and provision or transfer of data.

The central server 100 may include the C-ITS data linkage system 110 and a pre-established system 120.

The C-ITS data linkage system 110 standardizes or unifies data specifications between the central server and regional server, data specifications between the central server and client server/terminal, or data specifications between regional servers. The C-ITS data linkage system 110 standardizes or unifies data provision methods between the central server and regional server, data provision methods between the central server and client server/terminal, or data provision methods between regional servers.

The C-ITS data linkage system 110 may ensure the security of communication networks and perform data quality management. This aims to guarantee the reliability of data.

The pre-established system 120 includes a system that manages information on the status of each regional server or client server/terminal or traffic information collected from the public institution 500. For example, the pre-established system 120 includes an integrated control system.

The client server 200 and client terminal 300 may include the C-ITS data linkage systems 210 and 310 and pre-established systems 220 and 320, respectively. The C-ITS data linkage system 210 or 310 standardizes or unifies data specifications between the central server and client server/terminal or data specifications between the client server and client terminal. Additionally, the C-ITS data linkage system 210 or 310 standardizes or unifies data provision methods between the central server and client server/terminal or data provision methods between the client server and client terminal.

The pre-established system 220 or 320 includes services, software, applications, and functions for using C-ITS data.

The regional server 400 may include the C-ITS data linkage system 410 and a pre-established system 420.

The pre-established system 420 includes services, software, applications, and functions for processing or storing collected C-ITS data.

The roadside infrastructure 600 refers to equipment, devices, and facilities to collect C-ITS data or road environment information for C-ITS data.

The central server 100 establishes control paths for exchanging control information with each of the client server 200, client terminal 300, and regional server 400 and data paths for transmitting and receiving C-ITS data with each of the client server 200, client terminal 300, and regional server 400. As a result, the system 1 with the data integration structure has the disadvantage of potential bottlenecks or increased latency in data transmission, reception, or processing due to data centralization at the central server.

The C-ITS data linkage systems 110, 210, 310, and 410 may be implemented as logical functions capable of being performed or executed by physical components such as a processor. In other words, the processor may perform or execute the functions of the C-ITS data linkage system.

FIG. 3 illustrates a system 2 of a C-ITS based on a data distribution structure. The configuration of the system 2 is the same as the configuration of the system 1, but interconnections between components of the system 2 differ from interconnections between components of the system 1.

In the system 2, C-ITS data from each regional server 400 is not centralized in a central server 100. Instead, data paths are established directly between a regional server 400 and a client server 200 or client terminal 300 for transmitting and receiving C-ITS data. Thus, C-ITS data is distributedly processed per region, which alleviates load concentration, reduces latency in data transmission, reception, or processing, and improves service quality.

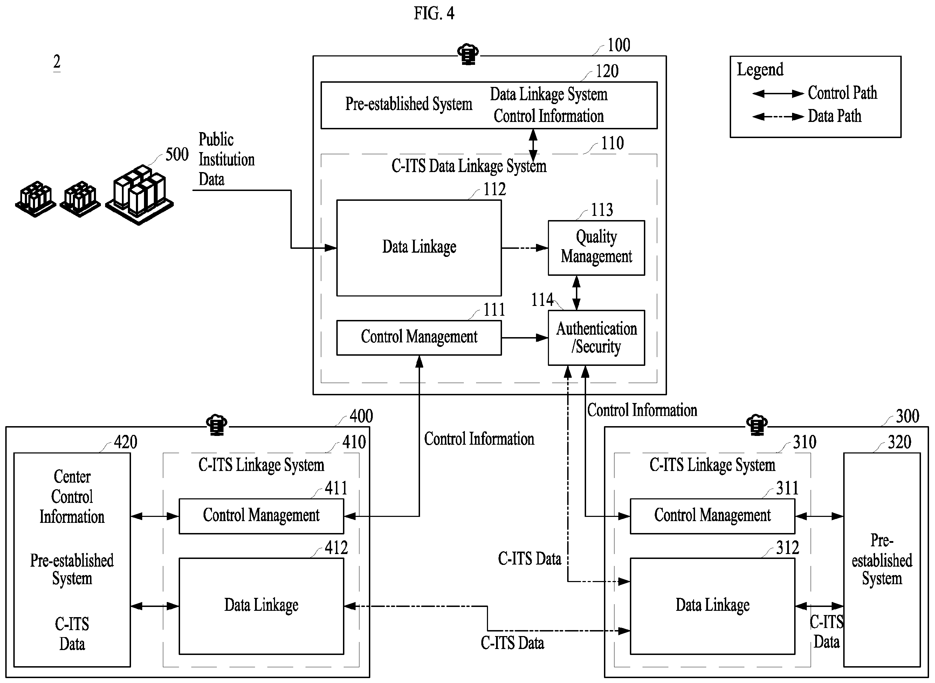

FIG. 4 illustrates a part of a C-ITS based on a data distribution structure.

Referring to FIG. 4, C-ITS data linkage systems 110, 310, and 410 include control management functions 111, 311, and 411 and data linkage functions 112, 312, and 412, respectively. Although not shown, a C-ITS data linkage system 210 of a client server 200 similarly includes a control management function 211 and a data linkage function 212.

Each of the control management functions 111, 211, 311, and 411 may include a function of managing at least one of the following: information related to a regional server such as information on services provided by the regional server, information on the location of a regional server, information required to connect to a regional server (i.e., connection information), or information on the current status of C-ITS data provided by a regional server or central server to a client server/terminal.

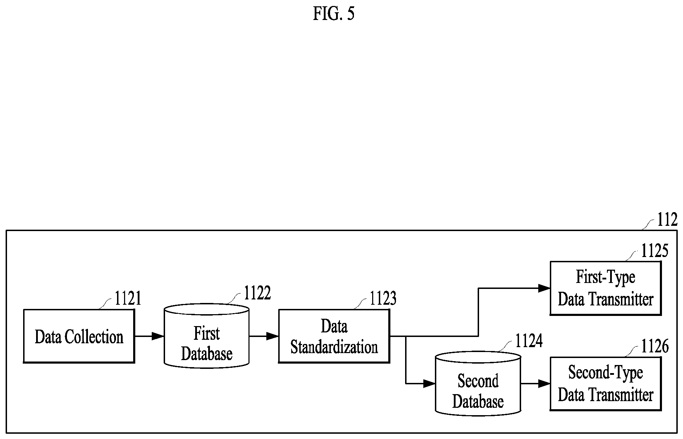

The data linkage functions 112, 312, and 412 will be described in detail with reference to FIGS. 5 to 7.

The C-ITS data linkage system 110 additionally includes a quality management function 113 and an authentication/security function 114.

The quality management function 113 assesses the validity of collected and standardized/unified C-ITS data. If it is determined that the validity is less than a predefined threshold, the C-ITS data is discarded. Here, the validity refers to whether the C-ITS data is capable of being effectively used. For example, if certain attributes of C-ITS data are missing or if the timestamp of the data is relatively old compared to the current time and thus, the data is no longer temporally relevant, it may be determined that the validity thereof is less than the predefined threshold.

Additionally, the authentication/security function 114 performs an authentication procedure for a client server or client terminal. In some cases, the client server or client terminal may generate C-ITS data and transmit the C-ITS data to a central server 100 or regional server 400. Since C-ITS data is directly related to safety, the C-ITS data should be genuine and provided by a reliable entity. To verify the C-ITS data, the authentication/security function 114 is included.

Although not shown, the regional server 400 also includes quality management and authentication/security functions. For instance, these functions may be integrated into the control management function 411 or the data linkage function 412 of the regional server 400. Alternatively, the quality management function may be included in one of the control management function 411 and data linkage function 412, while the authentication/security function is included in the other. Since the quality management and authentication/security functions of the regional server 400 are identical to the functions 113 and 114 of the central server, detailed descriptions are omitted.

Referring to FIG. 3 or 4, a structure in which a control path for transmitting and receiving control information and a data path for transmitting and receiving C-ITS data are interconnected may be identified. The central server device 100 establishes control paths for transmitting and receiving control information between multiple regional servers 400 and client servers/terminals 200/300. The central server device 100 also establishes auxiliary data paths for transmitting and receiving supplementary C-ITS data with the client servers/terminals 200/300. Additionally, the multiple regional servers 400 establish data paths for transmitting and receiving C-ITS data with the client servers/terminals 200/300.

In other words, control paths are established between the central server device 100 and the regional server device 400 and between the central server device 100 and the client servers/terminals 200/300. On the other hand, data paths are established between the client servers/terminals 200/300 and the regional server device 400 and between the client servers/terminals 200/300 and the central server device 100.

The control information is related to the regional server device, which may include any one of the following: service information provided by the regional server, connection information for access, data linkage information, and roadside event information (e.g., accidents). The data linkage information may include data formats or data transmission methods to be unified or standardized. The data linkage information is information pre-agreed or shared among the central server device 100 and multiple regional server devices in the proposed C-ITS. Thus, the central server device and all regional server devices may provide C-ITS data in a unified format to the client servers/terminals 200/300. Upon receiving the C-ITS data, the client servers/terminals 200/300 may also obtain the data linkage information via the control paths. Then, the client servers/terminals 200/300 may decode or interpret the received C-ITS data and use the C-ITS data for C-ITS-related services. Furthermore,

The control information may include messages necessary for transmitting and receiving C-ITS data (e.g., various requests, approvals, responses, etc.) and may also include the current status of services or data transmitted or provided to the client servers/terminals 200/300.

FIG. 5 is a block diagram for data linkage of a central server (or central server device).

A data linkage function 112 of a central server device 100 may include: a data collection function 1121; a first database 1122; a data standardization function 1123; a second database 1124; a first-type message transmitter 1125; and a second-type data transmitter 1126.

The data collection function 1121 may gather public data provided by public institutions (e.g., Police Agency, Expressway Corporation, Meteorological Administration). The public data may be included in or associated with C-ITS data. The first database 1122 stores the collected public data. The data standardization function 1123 may unify or standardize the stored public data (i.e., C-ITS data) based on a data format or transmission method pre-agreed upon by entities within a system 2.

Additionally, the data standardization function 1123 may distinguish or classify whether to use a first data transmission method or a second data transmission method based on the characteristics of C-ITS data or predefined criteria. In addition to the first and second methods, more transmission methods may be utilized for data transmission.

The first data transmission method is real-time. That is, once data is collected and processed (e.g., standardized or unified), the data may be immediately transmitted to a client server/terminal via the first-type data transmitter 1125. For instance, the first method may include a message broker method.

According to the message broker method, a session is connected between the central server and the client server/terminal, and thus, C-ITS data is transmitted immediately to the client server/terminal as soon as the data is generated or occurs. The message broker method is suitable for time-critical services or data (e.g., incident response services, forwarding information on accidents ahead, etc.). The message broker method may use protocols such as Message Queuing Telemetry Transport (MQTT) or Advanced Message Queuing Protocol (AMQP) for data transmission.

Specifically, according to the message broker method, the client server/terminal may request a session connection with the central server (or regional server). Once the session is established, the client server/terminal may subscribe to necessary C-ITS services or data. Subsequently, when the subscribed C-ITS services or data are generated, the central server (or regional server) may publish the data to the client server/terminal.

Conversely, the client server/terminal may publish C-ITS data (e.g., probe vehicle data (PVD), basic safety message (BSM), or location information such as the latitude and longitude) that the client server/terminal collects or generates to the central server (or regional server). Transmission of C-ITS data including location information to the central server or regional server allows the central server or regional server to determine the location of the client terminal. If a service area is configured, the regional server or central server may determine whether the client terminal is outside the service area based on the C-ITS data including the location information on the client terminal. If it is determined that the client terminal is outside the service area, the regional server or central server may terminate the connection with the client terminal.

The second data transmission method is non-real-time. That is, according to the second data transmission method, after data is stored in the second database 1124, the data may be transmitted to the client server/terminal via the second-type data transmitter 1126 in response to a data request from the client server/terminal. For instance, the second method may include an Open Application Programming Interface (OpenAPI) method.

In the OpenAPI, data is transmitted in a non-real-time manner. That is, if the client server/terminal requests data, the required data is retrieved from the database and transmitted in response to the request. The OpenAPI method is suitable for non-time-critical services or data (e.g., traffic, weather, etc.). The OpenAPI method primarily uses HyperText Transfer Protocol (HTTP).

Specifically, the client server/terminal may request C-ITS data via the OpenAPI method whenever needed and also provide location information thereon as an argument in the data request. The regional server or central server receives the data request from the client server/terminal and responds by transmitting the corresponding C-ITS data. Since the data request includes the location information on the client terminal, if a service area is configured, the regional server or central server may verify whether the client terminal is outside the service area. If the client terminal is determined to be outside the service area, the regional server or central server may transmit a response to the data request to notify the client terminal that the client terminal is outside the service area.

Therefore, the greater the impact of C-ITS data on road safety, the more likely the first data transmission method may be selected over the second data transmission method. Criteria for determining whether to use the first data transmission method or second data transmission method may be predefined. Alternatively, the data transmission method may be defined in advance based on the type or category of C-ITS data. The definitions or configurations related to transmission methods need to be shared among the central server device 100, regional server device 400, and client server/terminal 200/300.

FIG. 5 is a block diagram for data linkage of a central server (or central server device).

A data linkage function 112 of a central server device 100 may include: a data collection function 1121; a first database 1122; a data standardization function 1123; a second database 1124; a first-type message transmitter 1125; and a second-type message transmitter 1126.

The data collection function 1121 may gather public data provided by public institutions (e.g., Police Agency, Expressway Corporation, Meteorological Administration). The public data may be included in or associated with C-ITS data. The first database 1122 stores the collected public data. The data standardization function 1123 may unify or standardize the stored public data (i.e., C-ITS data) based on a data format or transmission method pre-agreed upon by entities within a system 2.

Additionally, the data standardization function 1123 may distinguish or classify whether to use a first data transmission method or a second data transmission method based on the characteristics of C-ITS data or predefined criteria. In addition to the first and second methods, more transmission methods may be utilized for data transmission.

The first data transmission method is real-time. That is, once data is collected and processed (e.g., standardized or unified), the data may be immediately transmitted to a client server/terminal via the first-type data transmitter 1125. For instance, the first method may include a message broker method.

According to the message broker method, a session is connected between the central server and the client server/terminal, and thus, C-ITS data is transmitted immediately to the client server/terminal as soon as the data is generated or occurs. The message broker method is suitable for time-critical services or data (e.g., incident response services, forwarding information on accidents ahead, etc.). The message broker method may use protocols such as MQTT or AMQP for data transmission.

Specifically, according to the message broker method, the client server/terminal may request a session connection with the central server (or regional server). Once the session is established, the client server/terminal may subscribe to necessary C-ITS services or data. Subsequently, when the subscribed C-ITS services or data are generated, the central server (or regional server) may publish the data to the client server/terminal.

Conversely, the client server/terminal may publish C-ITS data (e.g., PVD, BSM, or location information such as the latitude and longitude) that the client server/terminal collects or generates to the central server (or regional server). Transmission of C-ITS data including location information to the central server or regional server allows the central server or regional server to determine the location of the client terminal. If a service area is configured, the regional server or central server may determine whether the client terminal is outside the service area based on the C-ITS data including the location information on the client terminal. If it is determined that the client terminal is outside the service area, the regional server or central server may terminate the connection with the client terminal.

The second data transmission method is non-real-time. That is, according to the second data transmission method, data is stored in the second database 1124. Then, upon reception of a data request from the client server/terminal, the data may be transmitted to the client server/terminal via the second-type data transmitter 1126 in response to the data request. For instance, the second method may include an OpenAPI method.

In the OpenAPI, data is transmitted in a non-real-time manner. That is, if the client server/terminal requests data, the required data is retrieved from the database and transmitted in response to the request. The OpenAPI method is suitable for non-time-critical services or data (e.g., traffic, weather, etc.). The OpenAPI method primarily uses HTTP.

Specifically, the client server/terminal may request C-ITS data via the OpenAPI method whenever needed and also provide location information thereon as an argument in the data request. The regional server or central server receives the data request from the client server/terminal and responds by transmitting the corresponding C-ITS data. Since the data request includes the location information on the client terminal, if a service area is configured, the regional server or central server may verify whether the client terminal is outside the service area. If the client terminal is determined to be outside the service area, the regional server or central server may transmit a response to the data request to notify the client terminal that the client terminal is outside the service area.

Therefore, the greater the impact of C-ITS data on road safety, the more likely the first data transmission method may be selected over the second data transmission method. Criteria for determining whether to use the first data transmission method or second data transmission method may be predefined. Alternatively, the data transmission method may be defined in advance based on the type or category of C-ITS data. The definitions or configurations related to transmission methods need to be shared among the central server device 100, regional server device 400, and client server/terminal 200/300.

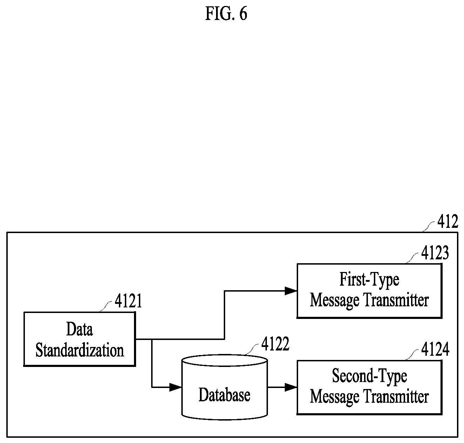

FIG. 6 is a block diagram for data linkage of a regional server (or regional server device).

A data linkage function 412 of a regional server device 400 may include: a data standardization function 4121; a database 4122; a first-type message transmitter 4123; and a second-type message transmitter 4124.

The regional server device 400 collects C-ITS data from roadside infrastructure 600 through a pre-established system 420. Thus, compared to the data linkage function 112 of the central server 100 shown in FIG. 5, the data collection function and the first database are omitted.

The data standardization function 4121 of the data linkage function 412 corresponds to the data standardization function 1123 of the data linkage function 112, the database 4122 of the data linkage function 412 corresponds to the second database 1124 of the data linkage function 112, the first-type message transmitter 4123 of the data linkage function 412 corresponds to the first-type message transmitter 1125 of the data linkage function 112, and the second-type message transmitter 4124 of the data linkage function 412 corresponds to the second-type message transmitter 1126 of the data linkage function 112. Thus, for detailed explanations, refer to the description of FIG. 5.

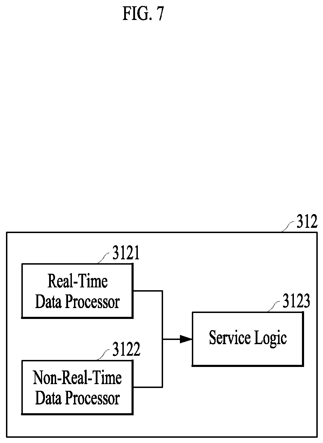

FIG. 7 is a block diagram for data linkage of a client terminal (or terminal device).

A data linkage function 312 of a client terminal 300 may include: a real-time data processor 3121; a non-real-time data processor 3122; and a service logic 3123.

The real-time data processor 3121 may receive and process C-ITS data transmitted from a first-type message transmitter of a central server or regional server. The non-real-time data processor 3122 may receive and process C-ITS data transmitted from a second-type message transmitter of the central server or regional server. The service logic 3123 may use the received C-ITS data to configure services intended to be provided to users.

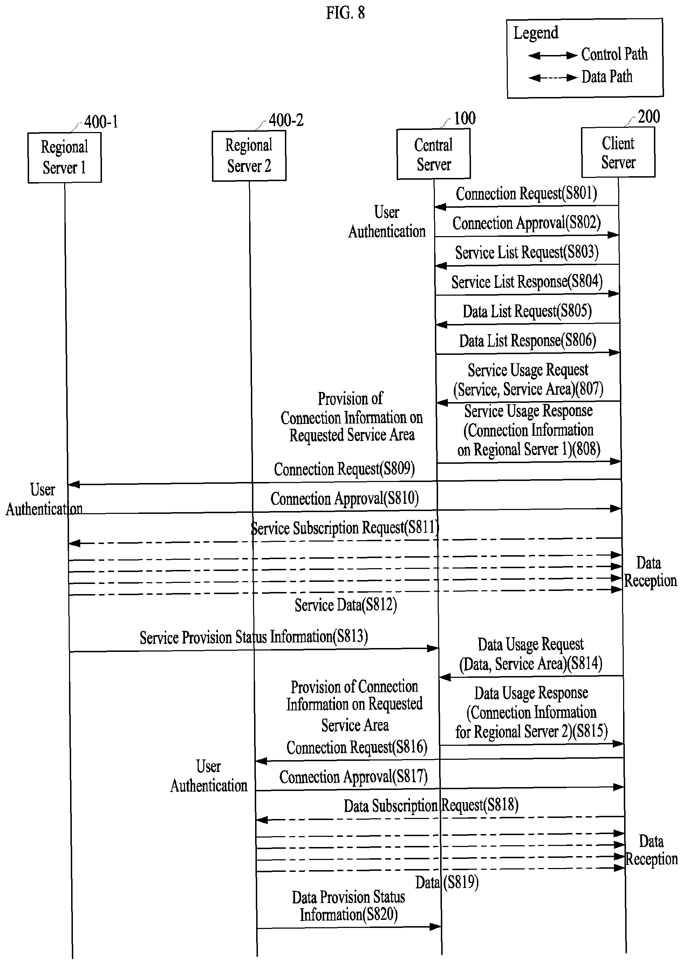

FIG. 8 illustrates a procedure for data transmission and reception based on a data distribution structure.

Specifically, FIG. 8 shows the following procedure. A client server 200 requests and receives a service list and data list from a central server 100. Then, the client server 200 specifies desired services or data along with a service area based on the received lists and transmits a service or data usage request to the central server 100. Subsequently, the client server 200 directly connects to regional servers 1 and 2 (400-1 and 400-2) that provide the requested services or data and then receive the services or data.

In FIG. 8 and related descriptions, services and data are mentioned separately to emphasize the distinct roles thereof.

A service may include at least one piece of C-ITS data. For example, a traffic signal information service may include signal phase and timing (SPaT) and map data (MAP) messages as C-ITS data. Therefore, when the client server/terminal subscribes to a single service, the client server/terminal may receive multiple pieces of C-ITS data from the central server or regional server.

Additionally, the client server/terminal may subscribe to SPaT and MAP messages individually without subscribing to any services.

The table below shows examples of a service list and a data list.

**[Table 1]**

| Service Type | Regional Server | Data Specification |
|---|---|---|
| Current Traffic Signal Information | Regional Server - 1, | SPaT, MAP |
| | Regional Server - 2 | |
| Work Zone Guidance | Regional Server - 1 | RSA |
| ... | ... | ... |

**[Table 2]**

| Data Type | Regional Server | Update Cycle |
|---|---|---|
| SPaT | Regional Server - 1, | 5 seconds |
| | Regional Server - 2 | |
| PVD | Regional Server - 2 | 1 second |
| ... | ... | ... |

Additionally, even for the same service, the C-ITS data provided by the regional server or central server may vary. For instance, a road side alert (RSA) or a roadside safety message (RSM) may be configured as C-ITS data for an "incident alert service." Similarly, a BSM or PVD may be configured as C-ITS data for a "location-based service."

Since the regional server may configure C-ITS data required for a given service, the C-ITS data received when the client server/terminal subscribes to or requests the same service from multiple regional servers may differ at least partially.

The transmission cycle of C-ITS data may vary for each regional server or for each central server.

Depending on C-ITS data, the regional server or central server may process or adjust the C-ITS data and then transmit the data to the client server/terminal. For example, the regional server or central server may generate SPaT data by subtracting the elapsed time between the generation time of SPaT data collected for information on the remaining time of traffic signals included in SPaT and the current time.

Hereinafter, a procedure for transmitting and receiving C-ITS services or C-ITS data according to the present disclosure will be explained with reference to FIG. 8. Although the explanations related to FIG. 8 will be based on the operation of the client server 200, the scope of the present disclosure may also encompass the operations of the counterparts of the client server 200, i.e., the central server 100 and regional servers 400-1 and 400-2.

The client server 200 may transmit a connection request message to the central server 100 to use C-ITS services or data (S801).

The central server 100 performs user authentication for the client server 200 and grants the connection requested by the client server 200.

The client server 200 may receive a connection approval message from the central server 100 (S802).

The client server 200 may transmit a service list request to the central server 100 (S803). From the perspective of the client server 200, receiving a service list may allow the client server 200 to verify whether a desired service is available.

The client server 200 may receive a service list response from the central server 100 in response to the service list request (S804). The service list response includes a list of C-ITS services provided by multiple regional servers. For example, a service list shown in Table 1 may be included in the service list response. Although not shown in Table 1, the service list response may include information on whether the data transmission method for each C-ITS service is the first method or the second method. Additionally, although not shown in Table 1, information on the location of each regional server may also be included in the service list response or service list.

The central server 100 may receive information on services provided by each regional server in advance through control paths. Based on the information, the central server may compile and manage a list of C-ITS services provided by multiple regional servers.

The client server 200 may transmit a data list request to the central server 100 (S805). From the perspective of the client server 200, receiving a data list allows the client server 200 to verify whether the client server 200 is capable of receiving desired data.

The client server 200 may receive a data list response from the central server 100 in response to the data list request (S806). The data list response includes a list of C-ITS data provided by multiple regional servers. For example, a data list shown in Table 2 may be included in the service list response and transmitted. Although not shown in Table 2, the data list response may include information on whether the data transmission method for each piece of C-ITS data is the first method or the second method. Additionally, although not shown in Table 2, information on the location of each regional server may also be included in the data list response or data list.

After receiving the service list or data list, the client server 200 may transmit a service usage request or data usage request to the central server 100, which is determined based on the choices made by the client server 200. In FIG. 8, it is illustrated that the client server 200 first transmits a service usage request related to a service area and C-ITS service related to regional server 1 (400-1) (S807) and then transmits a service usage request related to a service area and C-ITS data related to regional server 2 (400-2) (S814).

The client server 200 may transmit the service usage request to the central server 100 (S807). The service usage request includes information on the C-ITS service that the client server 200 desires to receive (e.g., traffic signal information service) and the service area (the location where the service is to be provided). The service usage request is determined based on the list of C-ITS services included in the previously received service list response. Therefore, the C-ITS service and service area included in the service usage request may implicitly indicate a specific regional server.

The central server 100 may identify a regional server capable of providing the corresponding service based on the C-ITS service and service area specified in the received service usage request. During this process, the list of C-ITS services provided by multiple regional servers, which the central server 100 compiles and manages in advance, may be used. The central server 100 identifies a regional server that matches the C-ITS service and service area specified in the received service usage request from the list of C-ITS services provided by multiple regional servers. It is assumed that regional server 1 is related to the service usage request.

The client server 200 may receive a service usage response from the central server 100, which includes information on a connection with regional server 1 related to the service usage request (S808).

The client server 200 may transmit a connection request message to regional server 1 based on the information on the connection with regional server 1 (S809).

Upon receiving the connection request message, regional server 1 (400-1) performs user authentication for the client server 200 and grants the connection requested by the client server 200.

The client server 200 may receive a connection approval message from regional server 1 (400-1) (S810).

Subsequently, the client server 200 may request to subscribe to the C-ITS service related to the service usage request in S807 from regional server 1 (400-1) (S811).

Here, since the service is a traffic signal information service, i.e., time-critical service, a subscription request is made. For non-time-critical services, the client server 200 may transmit a service data request instead of the subscription request. Alternatively, it may be indicated by the list of C-ITS services included in the service list response received in S804 that the corresponding service (i.e., traffic signal information service) is provided via a subscription-based transmission method (i.e., the first method).

Based on the subscription request, the client server 200 may periodically receive C-ITS service data (e.g., SPaT, MAP, etc.) according to a transmission cycle (S812).

After providing the services or data to the client server 200, regional server 1 (400-1) may transmit service provision status information to the central server 100 (S813). The service provision status information may be used by the central server 100 to monitor or manage the status of data linkage.

Subsequently, the client server 200 may require additional C-ITS data beyond the service data that the client server 200 is already receiving from the regional server.

The client server 200 may transmit the data usage request to the central server 100 (S814). The data usage request includes information on the C-ITS data that the client server 200 desires to receive (e.g., PVD) and the service area (the location where the data is to be provided). The data usage request is determined based on the list of C-ITS data included in the previously received data list response. Thus, the C-ITS data and service area included in the data usage request may implicitly indicate a specific regional server.

The central server 100 may identify a regional server capable of providing the corresponding data based on the C-ITS data and service area specified in the received data usage request. During this process, the list of C-ITS data provided by multiple regional servers, which the central server 100 compiles and manages in advance, may be used. The central server 100 identifies a regional server that matches the C-ITS data and service area specified in the received data usage request from the list of C-ITS data provided by multiple regional servers. It is assumed that regional server 2 is related to the data usage request

The client server 200 may receive a data usage response from the central server 100, which includes information on a connection with regional server 2 related to the data usage request (S815).

The client server 200 may transmit a connection request message to regional server 2 based on the information on the connection with regional server 2 (S816).

Upon receiving the connection request message, regional server 2 (400-2) performs user authentication for the client server 200 and grants the connection.

The client server 200 may receive a connection approval message from regional server 2 (400-2) (S817).

Subsequently, the client server 200 may request to subscribe to the data related to the data usage request in S814 from regional server 2 (400-2) (S818).

Here, since the data is PVD, i.e., time-critical data, a subscription request is made. For non-time-critical data, the client server 200 may transmit a data request instead of the subscription request. Alternatively, it may be indicated by the list of C-ITS data included in the data list response received in S806 that the corresponding data (i.e., PVD) is provided via a subscription-based transmission method (i.e., the first method)

Based on the subscription request, the client server 200 may periodically receive C-ITS data (e.g., PVD) according to a transmission cycle (S819).

After providing the C-ITS data to the client server 200, regional server 2 (400-2) may transmit data provision status information to the central server 100 (S820). The data provision status information may be used by the central server 100 to monitor or manage the status of data linkage.

The client server 200 may maintain service subscriptions with regional server 1 (400-1) and regional server 2 (400-2). Thus, the client server 200 may periodically receive C-ITS service data from regional server 1 (400-1) and regional server 2 (400-2).

The format, transmission method, and connection method of the C-ITS service data or C-ITS data received by the client server 200 are standardized or unified by the central server or regional server(s). Therefore, the client server 200 may connect to each regional server based on the connection information provided by the central server and receive the C-ITS service data or C-ITS data through the connections. Since the C-ITS service data or C-ITS data collected and processed by each regional server has a standardized or unified format, the client server 200 may encounter no obstacles in using the C-ITS service data or C-ITS data.

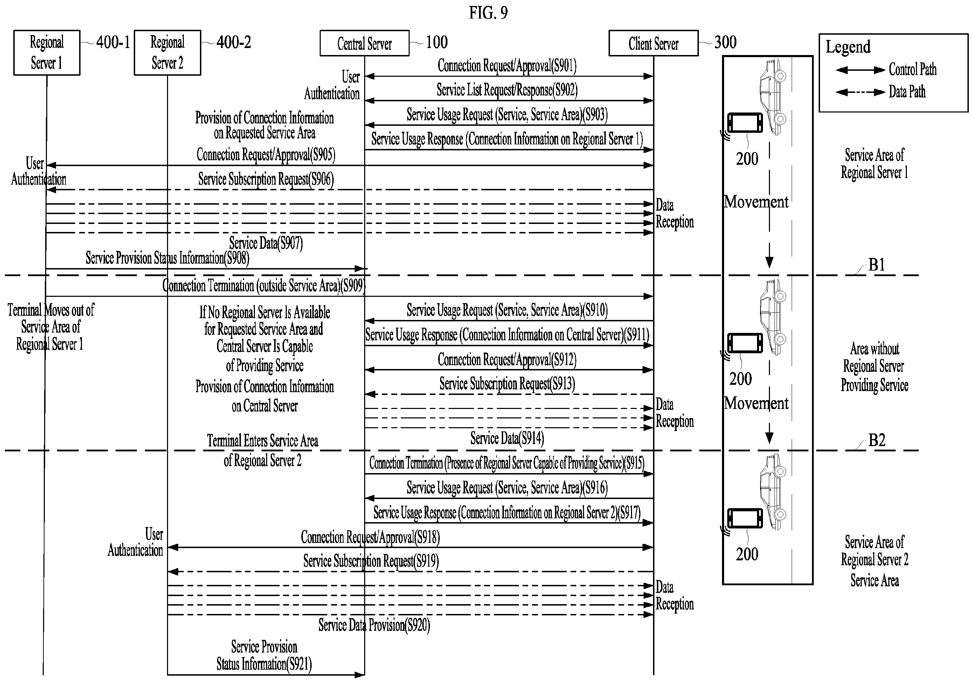

FIG. 9 illustrates a procedure for data transmission and reception based on a data distribution structure.

Specifically, FIG. 9 shows the following procedure. A client terminal 300 requests and receives a service list from a central server 100. Then, the client terminal 300 specifies services that the client terminal 300 desires to receive along with a service area based on the received lists and transmits a service usage request to the central server 100. Subsequently, the client terminal 300 directly connects to regional servers 1 and 2 (400-1 and 400-2) that provide the requested services and then receive the services or data. In addition, since the client terminal 300 is mobile, unlike the client server 200 in FIG. 8, it is assumed that there are no regional servers providing C-ITS services or C-ITS data in areas B1 and B2. It is proposed that the central server 100 may provide services in the corresponding areas. However, in areas where there are no regional servers available to provide C-ITS services or C-ITS data, the client terminal 300 may not be provided with any C-ITS services or C-ITS data.

Steps S901 to S908 in FIG. 9 are the same as or correspond to steps S801, S802, S803, S804, and S807 to S813 in FIG. 8, and thus, detailed explanations are omitted.

As the client terminal 300 moves, the client terminal 300 exits the service area of regional server 1 (400-1). Regional server 1 (400-1) may detect that the client terminal 300 is outside the service area thereof. Accordingly, the client terminal 300 may receive a connection termination notification message from regional server 1 (400-1), which includes a reason for terminating the connection (S909). In this case, the connection termination reason indicates that the client terminal 300 is located outside the service area.

Accordingly, the client terminal 300 may transmit the service usage request to the central server 100 (S910). The service usage request includes information on the C-ITS service that the client terminal 300 desires to receive and the service area. While the service usage request may be determined based on the list of C-ITS services included in the previously received service list response, the service usage request is not necessarily based on the list of C-ITS services.

The central server 100 may identify a regional server capable of providing the corresponding service based on the C-ITS service and service area specified in the received service usage request. However, since it is assumed in FIG. 9 that there are no regional servers that provide C-ITS services or data in areas B1 and B2, there are no regional servers capable of providing the corresponding service. In this case, the central server 100 may determine whether the central server 100 may provide the service (and service area) related to the received service usage request. If the central server 100 is capable of providing the service, the client terminal 300 may receive a service usage response from the central server 100, which includes information on a connection with the central server 100 (S911).

The client terminal 300 may transmit a connection request message to the central server 100 based on the information on the connection with central server 100 and receive a connection approval message from the central server 100 (S912). Upon receiving the connection request message, the central server 100 may perform user authentication for the client terminal 300. However, since the user authentication was already performed for the client terminal 300 in S901, the user authentication may be omitted.

Subsequently, the client terminal 300 may request to subscribe to the C-ITS service related to the service usage request in S807 from the central server 100 (S913).

Based on the subscription request, the client terminal 300 may periodically receive C-ITS service data according to a transmission cycle (S914).

As the client terminal 300 moves, the client terminal 300 may enter the service area of regional server 2. The central server 100 may detect that that the client terminal 300 enters the service area of regional server 2. Accordingly, the client terminal 300 may receive a connection termination notification message from the central server 100, which includes a reason for terminating the connection (S915). Here, the connection termination reason indicates that the client terminal 300 is located within the service area of a regional server capable of providing the service.

Accordingly, the client terminal 300 may transmit a service usage request to the central server 100 (S916). Steps S916 to S921 in FIG. 9 are equivalent to steps S903 to S908 except for the differences in the service area for receiving the service, the regional server, and the C-ITS services to be provided, and thus, detailed explanations are omitted.

Through steps S916 to S921, the client terminal 300 may receive the desired C-ITS service data from regional server 2 (400-2).

Although not illustrated, referring to FIGS. 3 and 4, it may be understood that data paths are bidirectional. Accordingly, as described above, the client terminal 300 may generate C-ITS data including information on the location thereof and transmit the C-ITS data to the central server or regional server. In this context, regarding the connection termination procedure (S909 and S915), the central server or regional server may check the location of the client terminal 300 based on the C-ITS data including the location information.

Additionally, regarding the connection termination procedure (S909 and S915), the connection termination may be performed by the client terminal 300. In this case, no additional messages for connection termination may be required. Based on the location thereof, the client terminal 300 may determine that the client terminal 300 exits the service area of the current regional server or enters the service area of another regional server. When the client terminal 300 crosses service area boundaries, i.e., regional transition, the client terminal 300 may transmit a service or data usage request to the central server 100 and attempt to connect to a regional server or central server responsible for a new service area.

Thus, even when the client terminal 300 moves, the client terminal 300 may receive C-ITS service data or C-ITS data from the regional server of each area based on the location thereof.

Additionally, the format, transmission method, and connection protocol of the C-ITS service data or C-ITS data received by the client terminal 300 are standardized or unified by the central server or regional server(s). Therefore, the client terminal 300 may connect to each regional server or central server using the connection information provided by the central server and receive C-ITS service data or C-ITS data through the connections. Since the C-ITS service data or C-ITS data collected and processed by each regional server or central server has a standardized or unified format, the client terminal 300 may encounter no obstacles in utilizing the C-ITS service data or C-ITS data.

As previously mentioned, redundant content between the descriptions of FIG. 9 and FIG. 8 is omitted. For details not explained in the procedures of FIG. 9, refer to FIG. 8.

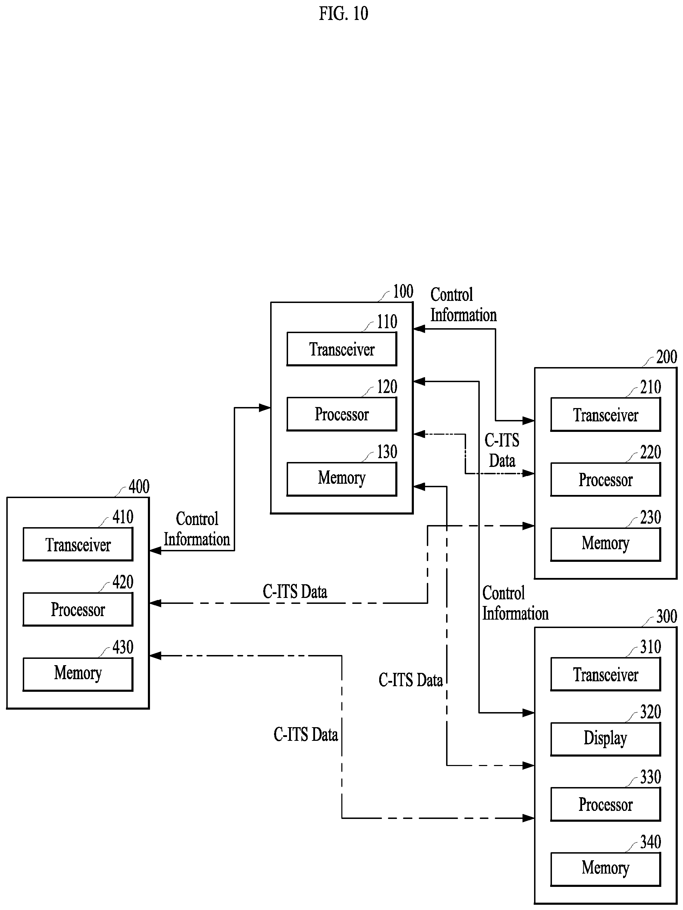

FIG. 10 is a system block diagram based on a data distribution structure.

Referring to FIG. 10, for the sake of convenience in explanation, one central server 100, one client server 200, one client terminal 300, and one regional server 400 are illustrated. However, in the actual system, there may be multiple client servers 200, multiple client terminals 300, and multiple regional servers 400.

The central server 100 includes a transceiver 110 for transmitting and receiving C-ITS-related data or control information with the client server 200, client terminal 300, or regional server 400. The central server 100 includes a processor 120 for processing data or control information to be transmitted or received or C-ITS-related data received from public institutions, as well as performing user authentication. The central server 100 may include a memory 130 for storing a list of C-ITS services, a list of C-ITS data, or standardized specifications of C-ITS data. The memory 130 includes storage means such as the databases 1122 and 1124 shown in FIG. 5, and the scope of the present disclosure is not limited to the name thereof. The standardized specifications of C-ITS data may include information on the standardization or unification of C-ITS data formats or transmission methods.

The central server 100 establishes control paths for transmitting and receiving control information with multiple regional servers and client terminals, respectively. Additionally, the central server 100 establishes auxiliary data paths for transmitting and receiving supplementary C-ITS data with the client terminals.

The auxiliary data path is used to provide C-ITS data to the client terminal in a service area where there are no regional servers.

The control paths with multiple servers are used to receive C-ITS service or data provision status information for at least one client including the client server 200 or client terminal 300 from each regional server.

The processor 120 receives a connection request message for C-ITS service or data usage from the client server 200 or client terminal 300. In response to the received connection request message, the processor 120 performs authentication for the client server 200 or client terminal 300 and transmits a connection approval message to the client server 200 or client terminal 300.

The processor 120 unifies or standardizes the format of C-ITS data collected from public institutions, roadside infrastructure, or other various sources. Based on the characteristics of the collected C-ITS data or predefined criteria, the processor 120 categorizes the collected C-ITS data into at least two transmission methods.

The processor 120 receives a service or data list request from the client server 200 or client terminal 300. In response to the received service or data list request, the processor 120 transmits a service or data list response to the client server 200 or client terminal 300. The service or data list response may include a list of C-ITS services or data provided by multiple regional servers. Additionally, the list may include information indicating a method of transmitting C-ITS service data or C-ITS data.

The processor 120 receives a service or data usage request from the client server 200 or client terminal 300 in response to the received service or data list response. Additionally, the processor 120 transmits a service or data usage response to the client server 200 or client terminal 300 in response to the received service or data usage request. The service or data usage request includes information on a C-ITS service or data that the client server 200 or client terminal 300 desires to use as well as information on a service area for the C-ITS service or data. The service or data usage response includes connection information on a regional server related to the service area.

Upon determining that there is no regional server related to the service area, the processor 120 transmits a service or data usage response to the client server 200 or client terminal 300, which includes connection information on the central server 100.

The processor 120 receives a service or data subscription request from the client server 200 or client terminal 300. Subsequently, based on the received service or data subscription request, the processor 120 transmits C-ITS data to the client server 200 or client terminal 300 according to a transmission cycle. Alternatively, the processor 120 may receive a request for services or data from the client server 200 or client terminal 300. In response to the received request, the processor 120 transmits data related to the C-ITS service or C-ITS data to the client server 200 or client terminal 300.

For aspects of the central server 100 not explained with reference to FIG. 10, refer to the operations, functions, and characteristics of the central server 100 described in FIGS. 2 to 9.

A client server 200 and a client terminal 300 include similar components as proposed in the present disclosure. The only difference is the presence or absence of a display (320). The following explanation focuses on the client terminal 300. A transceiver 210, a processor (220), and a memory (230) of the client server 200 correspond to a transceiver (310), a processor (330), and a memory (340) of the client terminal 300, respectively.

The client terminal 300 includes the transceiver (310) for transmitting and receiving C-ITS data or control information with a central server 100 or regional server 400. The client terminal 300 also includes the processor (330) for processing C-ITS data or control information, as well as for generating C-ITS data based on the information that the processor (330) collects.

Additionally, the client terminal 300 may include the memory (340) for storing received C-ITS data and control information. The memory (340) may include an algorithm for processing C-ITS data and provide services or applications based on the C-ITS data to users. The client terminal 300 may also include the display (320) for displaying information related to C-ITS data.

The client terminal 300 establishes control paths for transmitting and receiving control information with the central server 100. Additionally, the client terminal 300 establishes data paths for transmitting and receiving C-ITS data with multiple regional servers 400 and auxiliary data paths for transmitting and receiving supplementary C-ITS data with the central server 100. The auxiliary data path is used to receive C-ITS data from the central server 100 for service areas where there are no regional servers.

The processor (330) of the client terminal 300 transmits a connection request message to the central server 100 to use C-ITS services or data. Once the client terminal 300 is authenticated, the processor (330) receives a connection approval message from the central server 100 in response to the connection request message.

The format of C-ITS data is standardized by the central server 100 or multiple regional servers 400. Based on the characteristics of the C-ITS data or predefined criteria, the data is categorized into at least two transmission methods.

The processor (330) transmits a service or data list request to the central server 100. In response to the received service or data list request, the processor (330) receives a service or data list response from the central server 100. The service or data list response includes a list of C-ITS services or data provided by multiple regional servers 400.

The processor (330) transmits a service or data usage request to the central server 100 in response to the service or data list response. The processor (330) receives a service or data usage response from the central server 100 in response to the transmitted service or data usage request. The service or data usage request includes information on a C-ITS service or data the client terminal 300 desires to use, as well as information on a service area for the C-ITS service or data. The service or data usage response includes connection information on a regional server related to the service area.

Upon determining that there is no regional server related to the service area, the processor (330) receives a service or data usage response from the central server 100, which includes connection information on the central server 100.

The processor (330) may transmit a service or data subscription request to the regional server 400 or central server 100 based on the connection information included in the service or data usage response. Based on the service or data subscription request, the processor (330) may receive C-ITS data from the regional server 400 or central server 100 according to a data transmission cycle. Alternatively, the processor (330) may transmit a request for services or data to the regional server 400 or central server 100 and receive C-ITS data from the regional server 400 or central server 100 in response to the transmitted request. This is to categorize and transmit C-ITS data into two methods based on whether the data is t

Additionally, the processor (330) may obtain processed or corrected C-ITS data from the data collected by the regional server 400 or central server 100. If necessary, the regional server 400 or central server 100 may generate additional C-ITS data based on the collected data. This server-generated C-ITS data may also be transmitted to the client terminal 300.

As the client terminal 300 moves, the processor (330) may receive a connection termination notification including a connection termination reason from the regional server 400 or central server 100. Alternatively, as the client terminal 300 moves, the processor (330) may detect that the client terminal 300 crosses service area boundaries. In this case, the client terminal 300 may implicitly terminate the connection with the regional server 400 or central server 100 that provides the C-ITS service or data, without receiving any connection termination notification.

Upon receiving the connection termination notification, the processor (330) may transmit a service or data usage request to the central server 100. Alternatively, even without receiving the connection termination notification, if the processor (330) detects a change in the service area, the processor (330) may transmit a service usage request to the central server 100 to receive C-ITS service or data in a newly entered service area.

As the client terminal 300 moves, the processor (330) may sequentially receive C-ITS data for the same service from at least two different regional servers. In other words, the client terminal 300 may receive Service A in Service Area 1, then continue receiving Service A after moving to Service Area 2. However, in this case, C-ITS data provided for Service A by regional server 1, which serves Service Area 1, may differ at least partially from C-ITS data provided for Service A by regional server 2, which serves Service Area 2.

The processor (330) may collect information on the client terminal 300 or information on the surroundings of the client terminal 300, generate C-ITS data based on the collected information, and then transmit the C-ITS data to the regional server 400 or central server 100. The C-ITS data generated by the processor (330) may include a BSM, PVD, etc.

For aspects of the client server 200 or client terminal 300 not explained with reference to FIG. 10, refer to the operations, functions, and characteristics of the client server 200 or client terminal 300 described in FIGS. 2 to 9.

A regional server 400 includes a transceiver 410 for transmitting and receiving C-ITS-related data or control information with a client server 200, client terminal 300, or central server 100. Additionally, the regional server 400 includes a processor 420 for processing data or control information to be transmitted or received or C-ITS-related data received from public institutions, as well as performing user authentication. The regional server 400 may also include a memory (430) for storing a list of C-ITS services, a list of C-ITS data, or standardized specifications for C-ITS data. The memory (430) includes storage means such as the database 4122 shown in FIG. 6, and the scope of the present disclosure is not limited to the name thereof. The standardized specifications of C-ITS data may include information on the standardization or unification of C-ITS data formats or transmission methods.

The regional server 400 establishes control paths for transmitting and receiving control information with the central server 100. The regional server 400 also establishes data paths for transmitting and receiving C-ITS data with the client server 200 or client terminal 300.

The control paths between the regional server 400 and the central server 100 are used to transmit C-ITS service or data provision status information for at least one client including the client server 200 or client terminal 300 from the regional server 400.

The processor 420 of the regional server 400 receives a connection request message for C-ITS service or data usage from the client server 200 or client terminal 300. In response to the connection request message, the processor 420 performs authentication for the client server 200 or client terminal 300 and transmits a connection approval message to the client server 200 or client terminal 300.

The processor 420 standardizes or unifies the format of C-ITS data collected from roadside infrastructure. Based on the characteristics of the C-ITS data collected from the roadside infrastructure or predefined criteria, the processor 420 categorizes the data into at least two transmission methods.

The processor 420 receives a service or data subscription request from the client server 200 or client terminal 300. Based on the received service or data subscription request, the processor 420 transmits C-ITS data to the client terminal according to a data transmission cycle. Alternatively, the processor 420 may receive a request for services or data from the client server 200 or client terminal 300 and transmit C-ITS data to the client server 200 or client terminal 300 in response to the received request.

For aspects of the regional server 400 not explained with reference to FIG. 10, refer to the operations, functions, and characteristics of the regional server 400 described in FIGS. 2 to 9.

In another aspect of the present disclosure, the above-described proposals or operations may be provided as code that is capable of being implemented, performed, or executed by computers (herein, the computer is a comprehensive concept including a system on chip (SoC), a processor, a microprocessor etc.) or a computer-readable storage medium or computer program product storing or including the code. The scope of the present disclosure may be extended to the code or the computer-readable storage medium or computer program product storing or including the code.

The preferred embodiments of the present disclosure are provided to allow those skilled in the art to implement and embody the present disclosure. While the present disclosure has been described and illustrated herein with reference to the preferred embodiments thereof, it is understood to those skilled in the art that various modifications and variations could be made therein without departing from the scope of the disclosure. Therefore, the present disclosure is not limited to the embodiments disclosed herein but intends to give the broadest scope consistent with the new principles and features disclosed herein.

## Claims

1. A terminal device configured to receive cooperative intelligent transport system (C-ITS) data, the terminal device comprising:
a transceiver configured to transmit and receive the C-ITS data or control information with a central server or a plurality of regional servers; and
a processor configured to process the C-ITS data or the control information,
wherein the terminal device is configured to:
establish a control path for transmission and reception of the control information with the central server;
establish a data path for transmission and reception of the C-ITS data with each of the plurality of regional servers; and
establish an auxiliary data path for transmission and reception of supplementary C-ITS data with the central server,
wherein the auxiliary data path is used to receive the C-ITS data from the central server in an area in which there is no regional server, and
wherein the processor is configured to:
transmit a connection request message for C-ITS service or data usage to the central server; and
based on that authentication for the client terminal is performed, receive a connection approval message from the central server in response to the connection request message.

2. The terminal device of claim 1, wherein data formats of the C-ITS data are unified by the central server or the plurality of regional servers, and
wherein the C-ITS data is categorized into at least two transmission methods based on characteristics of the C-ITS data or predefined criteria.

3. The terminal device of claim 1, wherein the processor is configured to:
transmit a service or data list request to the central server; and
receive a service or data list response from the central server in response to the received service or data list request, and
wherein the service or data list response includes a list of C-ITS services or data provided by the plurality of regional servers.

4. The terminal device of claim 2, wherein the processor is configured to:
transmit a service or data usage request to the central server in response to a service or data list response; and
receive a service or data usage response from the central server in response to the transmitted service or data usage request,
wherein the service or data usage request includes information on a C-ITS service or data that the terminal device desires to use and information on a service area for the C-ITS service or data, and
wherein the service or data usage response includes connection information on a regional server related to the service area.

5. The terminal device of claim 4, wherein based on absence of the regional server related to the service area, the processor is configured to receive, from the central server, a service or data usage response including connection information on the central server.

6. The terminal device of claim 4, wherein the processor is configured to:
transmit a service or data subscription request to the central server or the regional servers based on the connection information included in the service or data usage response; and
receive the C-ITS data from the central server or the regional servers according to a transmission cycle of the data in response to the transmitted service or data subscription request, or
wherein the processor is configured to:
transmit a request for services or data to the central server or the regional servers based on the connection information included in the service or data usage response; and
receive the C-ITS data from the central server or the regional servers in response to the transmitted request.

7. The terminal device of claim 6, wherein based on that the terminal device moves between service areas, the processor is configured to receive a connection termination notification including a reason for terminating a connection with the central server or the regional servers from the central server or the regional servers.

8. The terminal device of claim 7, wherein based on receiving the connection termination notification, the processor is configured to transmit a service or data usage request to the central server.

9. The terminal device of claim 6, wherein based on that the terminal device moves between service areas, the processor is configured to sequentially receives C-ITS data related to a same service from at least two regional servers, and
wherein the C-ITS data related to the same service received from the at least two regional servers differ at least partially.

10. The terminal device of claim 6, wherein the received C-ITS data includes processed or corrected data derived from data collected by the central server or the regional servers.

11. A central server device configured to provide cooperative intelligent transport system (C-ITS) data to a client terminal, the central server device comprising:
a transceiver configured to transmit and receive the C-ITS data or control information with the client terminal or a plurality of regional servers; and
a processor configured to process the C-ITS data, the control information, or C-ITS data collected from public institutions,
wherein the central server device is configured to:
establish a control path for transmission and reception of the control information with each of the client terminal and the plurality of regional servers; and
establish an auxiliary data path for transmission and reception of supplementary C-ITS data with the client terminal,
wherein the auxiliary data path is used to provide the C-ITS data to the client terminal in an area in which there is no regional server, and
wherein the processor is configured to:
receive a connection request message for C-ITS service or data usage from the client terminal,
perform authentication for the client terminal in response to the received connection request message,
transmit a connection approval message to the client terminal.

12. The central server device of claim 11, wherein the processor is configured to:
unify formats of the C-ITS data collected from the public institutions; and
categorize the collected C-ITS data into at least two transmission methods based on characteristics of the collected C-ITS data or predefined criteria.

13. The central server device of claim 11, wherein the processor is configured to:
unify formats of the C-ITS data collected from the public institutions; and
categorize the collected C-ITS data into at least two transmission methods based on characteristics of the collected C-ITS data or predefined criteria.

14. The central server device of claim 11, wherein the processor is configured to:
receive a service or data list request from the client terminal; and
transmit a service or data list response to the client terminal in response to the received request, and
wherein the service or data list response includes a list of C-ITS services or data provided by the plurality of regional servers.

15. The central server device of claim 14, wherein the processor is configured to:
receive a service or data usage request from the client terminal in response to the service or data list response; and
transmit a service or data usage response to the client terminal in response to the received service or data usage request,
wherein the service or data usage request includes information on a C-ITS service or data that the client terminal desires to use and information on a service area for the C-ITS service or data, and
wherein the service or data usage response includes connection information on a regional server related to the service area.

16. The central server device of claim 15, wherein based on absence of the regional server related to the service area, the processor is configured to transmit a service or data usage response including connection information on the central server device to the client terminal.

17. The central server device of claim 15, wherein the processor is configured to:
receive a service or data subscription request from the client terminal
transmit the C-ITS data to the client terminal according to a transmission cycle of the C-ITS data in response to the received service or data subscription request, or
wherein the processor is configured to:
receive a request for services or data from the client terminal; and
transmit the C-ITS data to the client terminal in response to the received request.

18. A regional server device configured to provide cooperative intelligent transport system (C-ITS) data, the regional server device comprising:
a transceiver configured to transmit and receive the C-ITS data or control information with a client terminal or a central server; and
a processor configured to process the C-ITS data or the control information.
wherein the regional server device is configured to:
establish a control path for transmission and reception of the control information with the central server; and
establish a data path for transmission and reception of the C-ITS data with the client terminal, and
wherein the processor is configured to:
receive a connection request message for C-ITS service or data usage from the client terminal,
based on that authentication for the client terminal is performed, receive a connection approval message from the central server in response to the connection request message.

19. The regional server device of claim 18, wherein the processor is configured to:
unify formats of C-ITS data collected from roadside infrastructure; and
categorize the collected C-ITS data into at least two transmission methods based on characteristics of the collected C-ITS or predefined criteria.

20. The regional server device of claim 18, wherein the processor is configured to:
receive a service or data subscription request from the client terminal; and
transmit the C-ITS data to the client terminal according to a transmission cycle of the data in response to the received service or data subscription request, or
wherein the processor is configured to:
receive a request for services or data from the client terminal; and
transmit the C-ITS data to the client terminal in response to the received request.
